(19) Europäisches Patentamt
European Patent Office
Office européen des brevets

(11) **EP 4 708 849 A1**

(12) **EUROPEAN PATENT APPLICATION**

(43) Date of publication:
**11.03.2026 Bulletin 2026/11**

(21) Application number: **24306444.1**

(22) Date of filing: **05.09.2024**

(51) International Patent Classification (IPC):
*H04N 19/105* (2014.01)     *H04N 19/117* (2014.01)
*H04N 19/147* (2014.01)     *H04N 19/176* (2014.01)
*H04N 19/523* (2014.01)     *H04N 19/59* (2014.01)

(52) Cooperative Patent Classification (CPC):
H04N 19/105; H04N 19/117; H04N 19/147;
H04N 19/176; H04N 19/523; H04N 19/59

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **FRANCOIS, Edouard**
  **35890 BOURG DES COMPTES (FR)**

• **BORDES, Philippe**
  **35890 LAILLE (FR)**
• **RATH, Gagan Bihari**
  **35000 RENNES (FR)**
• **LO BIANCO, Federico**
  **35700 RENNES (FR)**
• **BALCILAR, Muhammet**
  **35830 BETTON (FR)**

(74) Representative: **Vossius & Partner**
**Patentanwälte Rechtsanwälte mbB**
**Siebertstraße 3**
**81675 München (DE)**

(54) **PREDICTION FROM NON-UNIFORM SAMPLING GRID**

(57) Systems and methods for video encoding and/or video decoding are provided. An encoder and/or decoder performs a method including receiving a plurality of reference blocks from one or more reference pictures for decoding a current block. The plurality of reference blocks are identified by one or more two-dimensional motion vectors including a sum of a full-pel motion vector and a fractional-pel motion vector. A plurality of reference samples of at least one reference block are projected onto a fractional-pel sampling grid associated with the current block. The plurality of reference samples may be positioned non-uniformly onto the fractional-pel sampling grid. A prediction block is generated by interpolating one or more samples from the projected plurality of reference samples. The method reconstructs the current block using the generated prediction block. The method performs a one-step two dimensional interpolation and/or a two-step interpolation including two interpolations, viz. horizontal interpolation and vertical interpolation.

FIG. 10

EP 4 708 849 A1

**Description**

**TECHNICAL FIELD**

The present application is related to systems and methods of video encoding and decoding, and specifically to motion estimation and/or motion compensation including various prediction modes.

**BACKGROUND**

Conventional bi-prediction mode includes two motion compensated predictions from two reference blocks, and a combination of the two motion compensated predictions to generate a final prediction. Similarly, a multi-hypothesis prediction (MHP) includes a combination of multiple predictions performed using multiple reference blocks. In that, a motion compensated prediction is performed for each reference block. Therefore, multiple prediction results are combined together to generate a combined prediction result (i.e. a final prediction result). Firstly, this leads to a high complexity that linearly increases as a number of the motion compensated predictions increases. Secondly, each motion compensated prediction from a reference block may not benefit from knowledge of one or more samples from other reference blocks used for other motion compensated predictions. This results in a less accurate combined prediction. Therefore, there is a need for a technique for an accurate prediction with minimal complexity.

**BRIEF SUMMARY**

In some implementations, the present disclosure is directed to implementations of systems and methods for video encoding and/or decoding. In some implementations, the present disclosure is directed to video encoders, video decoders, and/or video codec devices.

In an implementation, a method performed by a decoder for decoding video data is provided. The method comprises receiving a plurality of reference blocks from one or more reference pictures for decoding a current block. Each reference block of the plurality of reference blocks includes a plurality of reference samples. The method includes projecting the plurality of reference samples of at least one reference block of the plurality of reference blocks onto a fractional-pel sampling grid associated with the current block. The method includes interpolating one or more samples from the plurality of reference samples projected onto the fractional-pel sampling grid. The method includes generating a prediction block based on the one or more interpolated samples. The method includes reconstructing the current block using the generated prediction block.

In an implementation, the plurality of reference samples are positioned non-uniformly onto the fractional-pel sampling grid of the current block.

In an implementation, the at least one reference block is identified by a two-dimensional motion vector including a sum of a full-pel motion vector and a fractional-pel motion vector.

In an implementation, each of the full-pel motion vector and the fractional-pel motion vector comprise at least one of: a horizontal component or a vertical component.

In an implementation, interpolating the one or more samples from the plurality of reference samples comprises performing a two-dimensional interpolation including a horizontal interpolation and a vertical interpolation.

In an implementation, interpolating the one or more samples from the plurality of reference samples comprises performing a plurality of one dimensional interpolations including at least one of: the horizontal interpolation or the vertical interpolation.

In an implementation, the interpolation includes one or more of: a barycentric interpolation, a bilinear interpolation, a weighted sum of the plurality of reference samples, or a convolutional filtering of the plurality of reference samples.

In an implementation, the method includes determining a global weight for the at least one reference block and determining one or more weights for the plurality of reference samples of the at least one reference block based on the global weight associated with the at least one reference block. The method includes applying the one or more weights to the plurality of reference samples for generating the weighted sum.

In an implementation, a method performed by a video encoder is provided. The method includes performing motion estimation on a plurality of reference pictures for identifying a plurality of reference blocks. The method includes determining a plurality of motion vectors corresponding to the plurality of reference blocks. The method includes projecting a plurality of reference samples from the plurality of reference blocks onto a fractional-pel sampling grid associated with a current block. The method includes interpolating the one or more samples from the plurality of reference samples projected on the fractional-pel sampling grid for generating a prediction block.

In an implementation, each motion vector of the plurality of motion vectors is a two-dimensional motion vector including a sum of a full-pel motion vector and a fractional-pel motion vector, each comprising at least one of: a horizontal component or a vertical component.

In an implementation, the method includes generating one or more prediction blocks using one or more prediction modes. The method includes determining, for each prediction block of the one or more prediction blocks, a corresponding rate-distortion cost. The method includes selecting a prediction mode associated with a minimum rate-distortion cost. The method includes encoding the current block using the selected prediction mode.

In an implementation, a decoder comprising one or more processors is provided. The one or more processors are configured to perform any of the methods described above.

In an implementation, a video codec device comprising one or more processors is provided. The one or more processors are configured to perform any of the encoding methods and/or decoding methods described above.

In an implementation, a circuit configured to perform any of the encoding methods and/or decoding methods described above is provided.

In an implementation, a non-transitory computer-readable medium is provided. The non-transitory computer-readable medium comprises instructions that, when executed by one or more processors of a computing device, cause the one or more processors to perform any of the encoding methods and/or decoding methods described above.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more implementations of the present disclosure;

FIG. 2 is a block diagram illustrating an example video encoder according to one or more implementations of the present disclosure;

FIG. 3 is a block diagram illustrating an example video decoder according to one or more implementations of the present disclosure;

FIG. 4A illustrates an example reference block identified by a full-pel motion vector, according to one or more implementations of the present disclosure;

FIG. 4B illustrates one or more example reference block samples of the reference block positioned relatively to a current block fractional sampling grid, according to one or more implementations of the present disclosure;

FIG. 4C illustrates an example motion compensation process, according to one or more implementations of the present disclosure;

FIG. 4D and FIG. 4E illustrate an example output of a horizontal interpolation and a vertical interpolation respectively, according to one or more implementations of the present disclosure;

FIG. 5A illustrates an example block diagram of a bi-prediction process, according to one or more implementations of the present disclosure;

FIG. 5B illustrates an example a block diagram of a multi-hypothesis prediction (MHP) process in case of combining three or more predictions, according to one or more implementations of the present disclosure;

FIG. 6A illustrates an example process for a bi-directional prediction according to one or more implementations of the present disclosure;

FIG. 6B illustrates an example final interpolation process according to one or more implementations of the present disclosure;

FIG. 6C and FIG. 6D illustrate an example output of a horizontal interpolation and a vertical interpolation respectively, according to one or more implementations of the present disclosure;

FIG. 7A illustrates an example of one or more considered neighborhood samples, according to one or more implementations of the present disclosure;

FIG. 7B illustrates example locations of the one or more considered neighborhood samples, according to one or more implementations of the present disclosure;

FIG. 8 illustrates an example process of deriving the one or more one-dimensional filter coefficients from a template area surrounding one or more reference blocks and a current block, according to one or more implementations of the present disclosure;

FIG. 9 illustrates an example of a plurality of samples from a plurality of different reference blocks projected into a current block sampling grid, according to one or more implementations of the present disclosure; and

FIG. 10 illustrates a motion estimation process, according to one or more implementations of the present disclosure.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

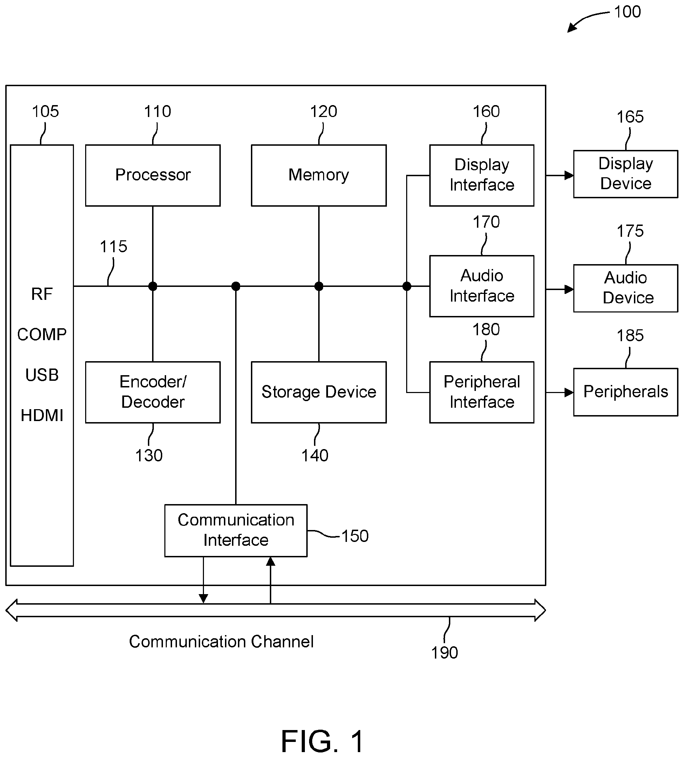

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

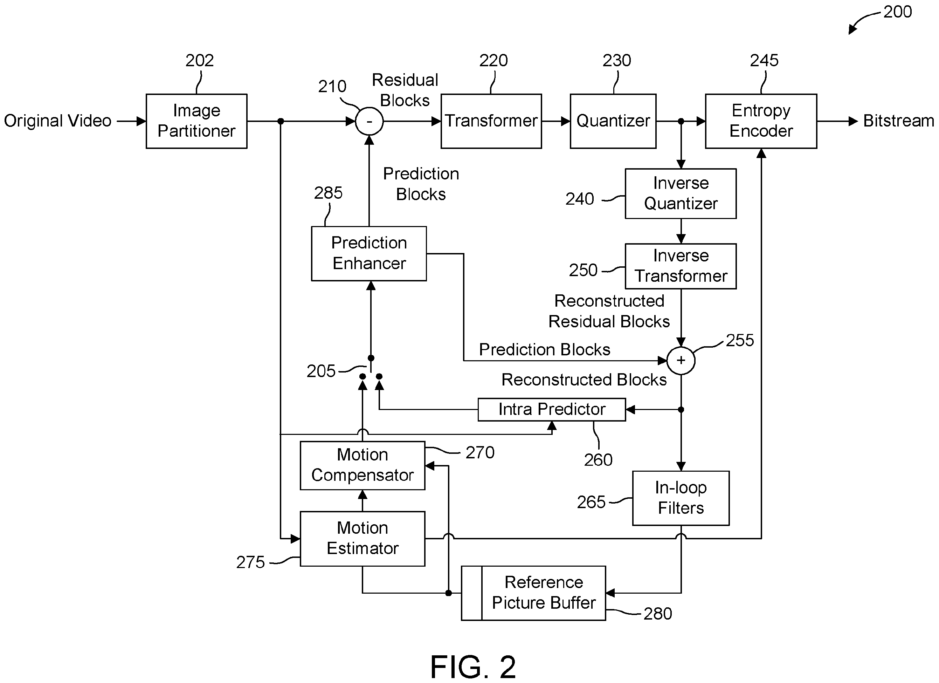

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

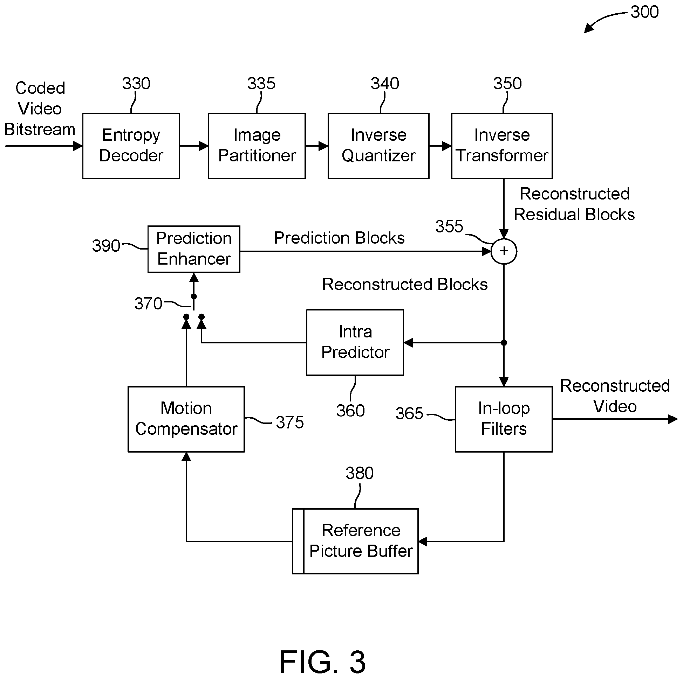

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, $U$ and $V$ (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Inter prediction includes predicting a current block (cur _block) in a current picture from a reference block (ref_block) in a reference picture. The reference block may be identified by a two-dimensional motion vector (mv). A reference picture index (ref_idx) may identify the reference picture in a decoded pictures buffer (DPB). The motion vector may be of a fractional-pel accuracy (also referred to as "subpel accuracy"), which may mean that one or more horizontal components and/or one or more vertical components of the motion vector may have a fractional-pel accuracy. In an example, the motion vector mv = ($mv_x$ = 2.5, $mv_y$ = -1.25). The motion vector may be seen as a sum of a full-pel motion vector (mv _full) and a fractional-pel motion vector (mv_frac) with one or more positive components (mv_frac_x>=0, mv_frac_y>=0). In an example, the full-pel motion vector mv_full= (2, -2) and the fractional-pel motion vector mv_frac= (0.5, 0.75). One or more components of the fractional-pel motion vector (i.e. mv_frac) may correspond to one or more horizontal fractional sample positions and/or one or more vertical fractional sample positions in the reference frame, and may also be referred to as one or more horizontal phases and/or one or more vertical phases respectively.

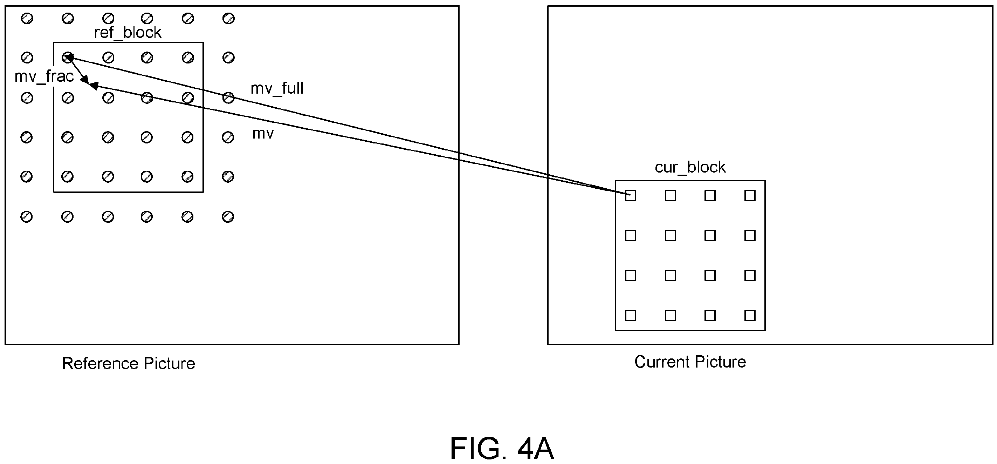

FIG. 4A illustrates an example reference block (ref_block) identified by the full-pel motion vector (mv _full), according to one or more implementations of the present disclosure. In an example, one or more samples of the reference block (ref_block) located at the full-pel position in the reference picture may correspond to one or more grey disks. The fractional-pel motion vector (mv_frac) may indicate a fractional location of the one or more samples to interpolate in the reference block.

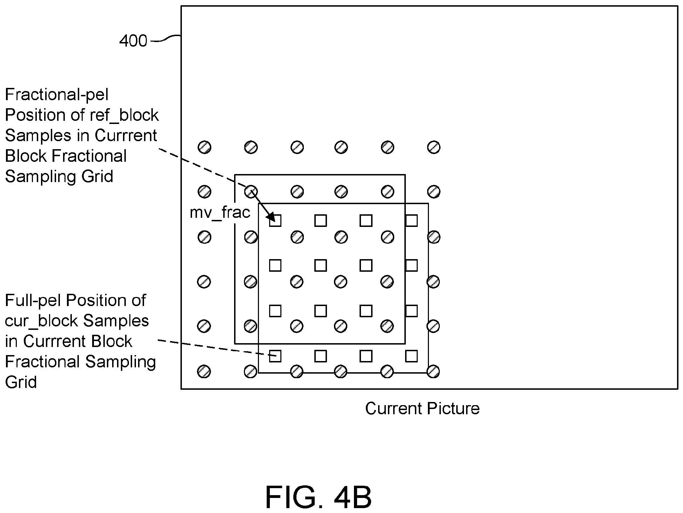

FIG. 4B illustrates one or more example samples of the reference block (ref_block) positioned relatively to a current block fractional sampling grid, according to one or more implementations of the present disclosure.

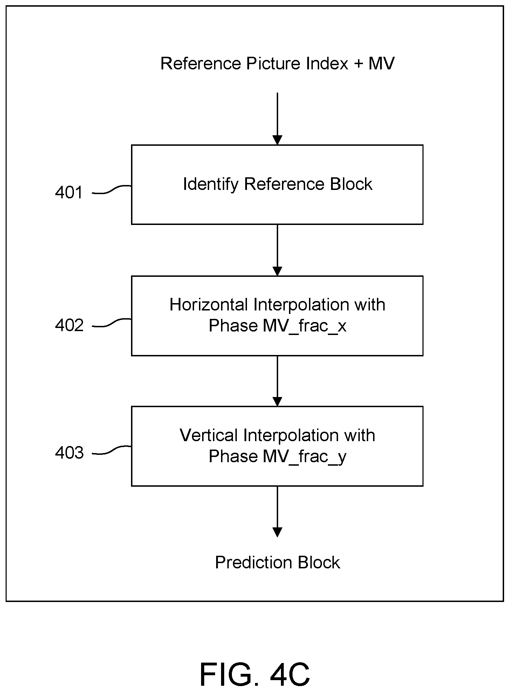

FIG. 4C illustrates an example motion compensation process, according to one or more implementations of the present disclosure. At 401, the motion compensation process includes identifying the reference block (ref_block) in the reference picture of the reference picture index (ref_idx) using the motion vector. The motion compensation process further includes performing a two-dimensional (2D) interpolation that is traditionally implemented by cascading a first one-dimensional (1D) interpolation, e.g. a 1D horizontal linear interpolation or a 1D vertical linear interpolation, followed by a second 1D interpolation, e.g. the 1D vertical interpolation or the 1D horizontal interpolation. At 402, the motion compensation process includes the horizontal interpolation from one or more reference block full-pel samples using a phase mv_frac_x. At 403, the motion compensation process includes performing the vertical interpolation from one or more horizontally interpolated samples from 402 using a phase mv_frac_y. The motion compensation process provides the prediction block. In an example, an order of the two interpolations may vary, i.e., the horizontal interpolation may be performed earlier than the vertical interpolation or the vertical interpolation may be performed earlier than the horizontal interpolation.

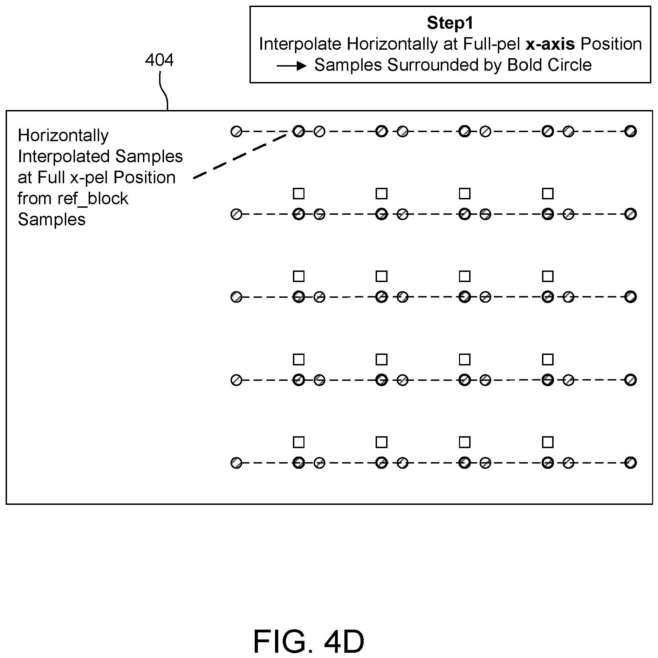

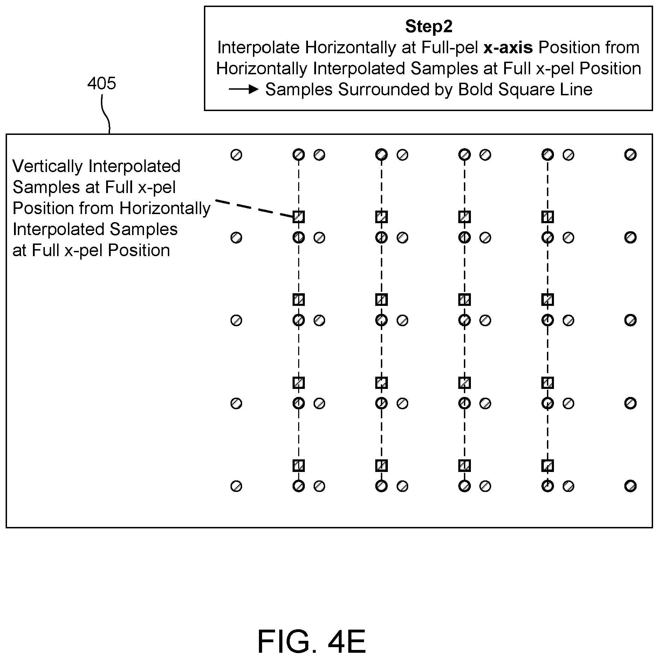

FIG. 4D and FIG. 4E illustrate an example output of a horizontal interpolation 404 and a vertical interpolation 405 respectively, according to one or more implementations of the present disclosure.

The interpolation includes a convolution of one or more input samples with one or more linear filters. In an example, a vertical interpolation filter and/or a horizontal interpolation filter may be identified among a set of polyphase linear filters by respective horizontal and/or vertical phases. In an example, one or more polyphase linear filters used in VVC are provided in Table 1, the motion vector accuracy is 1/16th pel, therefore there are 16 possible fractional sample positions (and/or phases etc.). For each fractional position p, an 8-tap filter may be provided. In an example, a normalization factor of value 64 applies during the interpolation process, corresponding to the sum of the filter coefficients for any phase. For fractional position p=0, one or more full-pel position samples may be copied into the prediction block (which may be equivalent to a 8-tap filter [0,0,0,64,0,0,0,0]). For phase p=8, 2 filters may be provided. The one to be used may be selected based on a value of a parameter (hpelIfIdx) assigned to the respective prediction block. This type of the interpolation may be referred to as a traditional 1D interpolation.

Table 1

| Fractional sample position p | interpolation filter coefficients | | | | | | | |
|---|---|---|---|---|---|---|---|---|
| | $f_L[p][0]$ | $f_L[p][1]$ | $f_L[p][2]$ | $f_L[p][3]$ | $f_L[p][4]$ | $f_L[p][5]$ | $f_L[p][6]$ | $f_L[p][7]$ |
| 1 | 0 | 1 | -3 | 63 | 4 | -2 | 1 | 0 |
| 2 | -1 | 2 | -5 | 62 | 8 | -3 | 1 | 0 |
| 3 | -1 | 3 | -8 | 60 | 13 | -4 | 1 | 0 |
| 4 | -1 | 4 | -10 | 58 | 17 | -5 | 1 | 0 |
| 5 | -1 | 4 | -11 | 52 | 26 | -8 | 3 | -1 |
| 6 | -1 | 3 | -9 | 47 | 31 | -10 | 4 | -1 |
| 7 | -1 | 4 | -11 | 45 | 34 | -10 | 4 | -1 |
| 8 (hpelIfIdx == 0) | -1 | 4 | -11 | 40 | 40 | -11 | 4 | -1 |
| 8 (hpelIfIdx == 1) | 0 | 3 | 9 | 20 | 20 | 9 | 3 | 0 |
| 9 | -1 | 4 | -10 | 34 | 45 | -11 | 4 | -1 |
| 10 | -1 | 4 | -10 | 31 | 47 | -9 | 3 | -1 |
| 11 | -1 | 3 | -8 | 26 | 52 | -11 | 4 | -1 |
| 12 | 0 | 1 | -5 | 17 | 58 | -10 | 4 | -1 |
| 13 | 0 | 1 | -4 | 13 | 60 | -8 | 3 | -1 |
| 14 | 0 | 1 | -3 | 8 | 62 | -5 | 2 | -1 |
| 15 | 0 | 1 | -2 | 4 | 63 | -3 | 1 | 0 |

In an example, one or more sets of polyphase linear filters may be used and/or selected depending on a block size, a block shape, a scaling ratio between the reference picture and the current picture, and/or an index coded in the bitstream etc.

In an example, an inter bi-prediction is the prediction mode used in one or more video coding standards that includes combining two inter predictions from two different reference blocks. In the inter bi-prediction mode, the two prediction blocks, viz. a first prediction block ($Pred_0$) and a second prediction block (Predi) may be computed by a motion compensation process using one or more reference pictures identified from one or more reference pictures lists, viz. a first reference list ($L_0$) and a second reference list ($L_1$). The reference picture used to compute the first prediction block ($Pred_0$)

may have a first reference index (refIdx$_0$) and the reference picture used to compute the second prediction block (Predi) may have a second reference index (refIdx$_1$). The two prediction blocks (i.e. the Pred$_0$ and the Predi) may be combined to form one single prediction block Pred$_{gbi}$:

$$\text{Pred}_{gbi}\,[x,y] = (\ \text{Pred}_0[x,y] + \text{Pred}_1[x,y] + 1\ ) >> 1 \quad \ldots\ldots\ldots\ldots\ldots\ldots\ldots\ldots \text{(Equation 1)}$$

for all positions (x,y) in the two prediction blocks.

In a generalized bi-prediction mode, the two weights (viz. $w_0$ and $w_1$) may be used for combining the two predictions. The two weights may not necessarily equal to one:

$$\text{Pred}_{gbi}\,[x,y] = (\ w_0.\text{Pred}_0[x,y] + w_1.\text{Pred}_1[x,y] + \text{offset}) / \text{norm} \quad \ldots\ldots\ldots\ldots \text{(Equation 2)}$$

for all positions (x,y) in the two prediction blocks.
where offset denotes a normalizing offset, a norm is a normalizing factor. Typically, the norm may be equal to $w_0+w_1$.

In VVC, one or more indexed (gbi_index) pre-defined weights may be used. A syntax element (gbi_index) may be coded for the $w_1$ ($w_0$ deduced from $w_1$ as $w_0=1-w_1$) using fixed binarization as depicted in an example illustrated in Table 2:

Table 2

| GBi Index | Weight value of $w_1$ | Binarization of GBi Index |
|---|---|---|
| 0 | -1/4 | 0000 |
| 1 | 3/8 | 001 |
| 2 | 1/2 | 1 |
| 3 | 5/8 | 01 |
| 4 | 5/4 | 0001 |

The syntax element (gbi_index) may be coded for each CU coded in the inter bi-prediction mode, except in a merge mode where the value of the syntax element (gbi_index) may be inferred from one or more GBI weights of one or more neighboring CUs from which a current CU inherits other parameters.

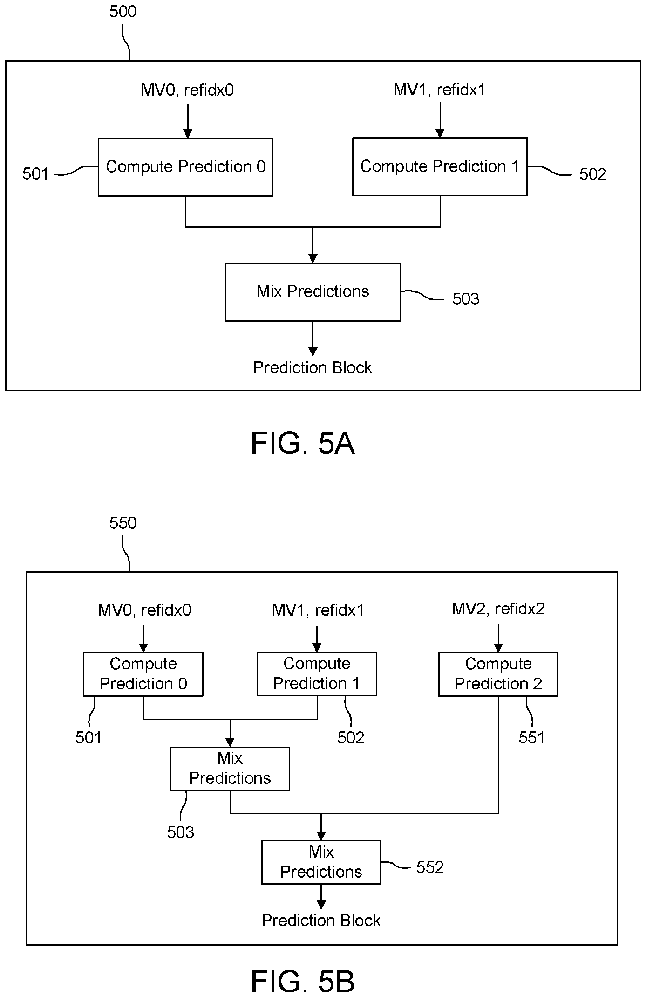

FIG. 5A illustrates an example block diagram of a bi-prediction process, according to one or more implementations of the present disclosure. At 501, one or more predictions from the first reference list (L$_0$) are computed based on a first motion vector (MV$_0$) and a first reference list index for the first reference list (L$_0$), i.e. the first reference index (refidx$_0$). At 502, one or more predictions from the second reference list (L$_1$) are computed based on a second motion vector (MV$_1$) and a second reference list index for the second reference list (L$_1$), i.e. the second reference index (refidxi). The first and second prediction blocks (Pred$_0$ and Predi) resulting from 501 and 502, respectively, are combined at 503 to generate a final prediction block.

A multi-hypothesis prediction (MHP) mode is a generalization of the bi-prediction mode. In a multi-hypothesis inter-prediction mode, one or more additional motion-compensated prediction signals may be signaled, in addition to a conventional bi-prediction signal. A resulting overall prediction signal may be obtained by sample-wise weighted superposition. With a bi-prediction signal $p_{bi}$ and a first additional inter prediction signal and/or hypothesis $h_3$, a resulting prediction signal $p_3$ may be obtained as follows:

$$p_3 = (1-\alpha)p_{bi} + \alpha h_3 \quad \ldots\ldots\ldots \text{(Equation 3)}$$

A weighting factor a may be specified by a new syntax element (add_hyp_weight_idx), according to the following mapping shown in Table 3:

Table 3

| add_hyp_weight_idx | $\alpha$ |
|---|---|
| 0 | 1/4 |
| 1 | -1/8 |

In this case, 3 reference blocks are therefore involved: the 2 reference blocks of the bi-prediction $p_{bi}$ and a third reference block involved in prediction of $h_3$. Analogously to above, more than one additional prediction signal may be used. A resulting overall prediction signal is accumulated iteratively with each additional prediction signal.

$$p_{n+1} = (1 - \alpha_{n+1})p_n + \alpha_{n+1}h_{n+1} \qquad \ldots\ldots\ldots\ldots\ldots\ldots\ldots (\text{Equation 4})$$

The resulting overall prediction signal may be obtained as a last $p_n$ (i.e., the $p_n$ having largest index n). In total, N=n+1 reference blocks may be used for generating a combined prediction.

In an example, one or more motion parameters of each additional prediction hypothesis may be signaled explicitly by specifying one or more of: a reference index, a motion vector predictor index, and/or a motion vector difference; and/or may be signaled implicitly by specifying a merge index. A separate multi-hypothesis merge flag maybe used to distinguish between these two signaling modes.

FIG. 5B illustrates an example block diagram of a MHP process in case of combining 3 predictions, according to one or more implementations of the present disclosure. Compared to FIG. 5A, the generation of the 3rd prediction is performed at 551, and the combination of the 3rd prediction with the bi-prediction is performed at 502. Adding more predictions would include cascading, for each additional prediction, a step of computation of the prediction from the motion vector and a reference index (refIdx) associated with the prediction, and mix (and/or combine etc., for example) the prediction with a previously combined prediction. Each time a new prediction is added, the prediction may be computed and mixed (and/or combined etc., for example) to generate the combined prediction.

In an embodiment, a method for an enhanced bi-prediction mode (N=2) and/or an enhanced MHP mode (and/or an enhanced multi-prediction combination, N>2) that performs the bi-prediction prediction and/or the MHP prediction from the N reference blocks is provided. The method includes projecting all the samples from the 2 reference blocks (in case of bi-prediction) and/or N reference blocks (in case of MHP) into the fractional-pel accuracy sampling grid of the current block. The method further includes performing the interpolation of the current block samples at the full-pel position from the projected samples. The projected samples may be non-uniformly (or equivalently, irregularly) positioned into the current block sampling grid.

In an embodiment, the projection may be applied after a first 1D interpolation applied in one dimension (e.g. horizontal dimension or vertical dimension). A second 1D interpolation in other dimension may be performed based on non-uniformly (or equivalently, irregularly) positioned samples, using barycentric interpolation, and/or a weighting sum of samples, and/or using irregularly sampled 1D convolution filters. In an example, the one or more weights and/or coefficients of the 1D interpolation in the other dimension may be derived from the one or more samples neighboring the reference blocks and/or the current block.

In an embodiment, the projection may be applied to all the samples from all the reference blocks. Thereafter, a 2D interpolation may be applied to the projected samples. In an example, the 2D interpolation may be performed based on the irregularly positioned samples, using the barycentric interpolation, a bilinear interpolation, and/or a weighted sum of samples, and/or using non-regular sampled 2D convolution filters. In an example, the 2D interpolation parameters (for example, the one or more weights and/or convolution filters coefficients etc.) may be derived from the samples neighboring the reference blocks and/or the current block. In an example, in case of the weighted prediction, one or more global weights may be applied to the samples of each reference block before performing the interpolation of the projected samples, with a final normalization, for example, using the sum of the one or more weights as a normalization factor.

In an embodiment, all the reference samples may be projected into the current block sampling grid and then interpolation may be performed from the projected samples.

In an embodiment, the bi-prediction interpolation may include projecting the reference samples from each reference block, a first reference block (ref_block0) and a second reference block (ref_block1), into the fractional-pel sampling grid of the current block (cur _block). The current block (cur _block) samples from the projected samples may be interpolated.

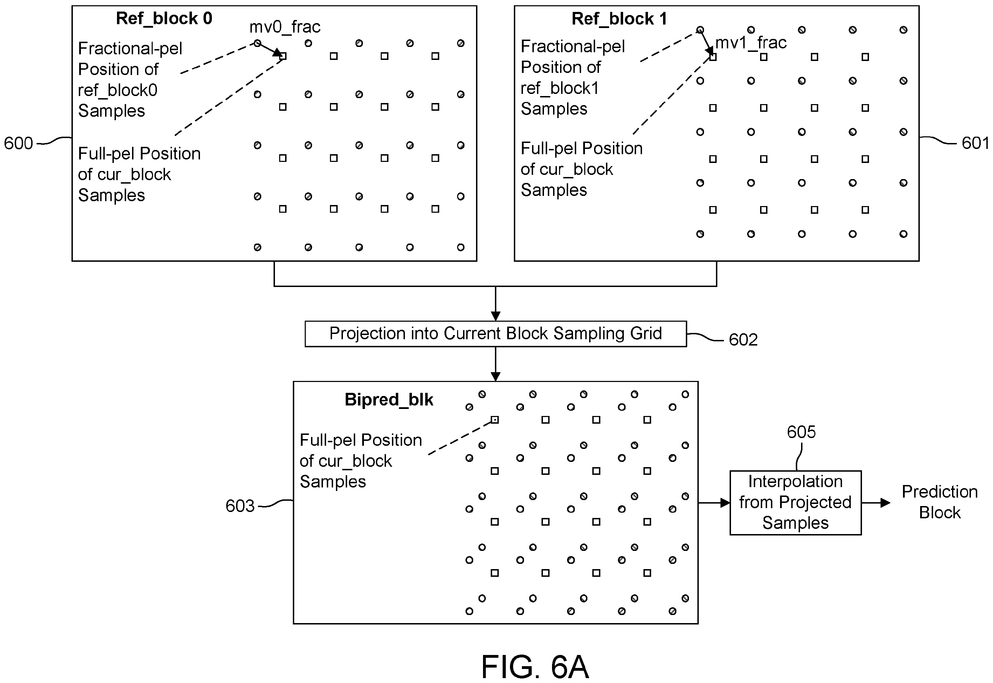

FIG. 6A illustrates an example process for the bi-directional prediction according to one or more implementations of the present disclosure. A plurality of the first reference block (ref_block0) samples 600 and a plurality of the second reference block (ref_block1) samples 601 may be projected at 602 into the current block (cur _block) fractional-pel precision sampling grid 603. At 604, the interpolation may be performed from the projected samples. In an example, in the bi-directional prediction process of the present disclosure, the two predictions performed at 501 and 502 may be replaced by a single prediction at 605.

In an embodiment, multiple ways of computing the interpolation, either separately for the two directions (horizontal and vertical) and/or using a single 2D interpolation (for example using a 2D convolution), are provided.

At 602, the projection may be performed for the samples of the first reference block (ref_block0), and the projection may be performed for the samples of the second reference block (ref_block1).

Let N be the number of predictions and n the number of samples in the reference block plus margin (of size b), where n is derived as (sx + 2b) x (sy + 2b), with sx and sy the horizontal and vertical dimensions of the block.

In an example, the interpolation process from the projected samples at 605 may be performed based on successive (N) x n 1D linear interpolations applied in a given direction (horizontal and/or vertical) using the n samples of each same reference block. Thereafter, the final interpolation in the other direction may be performed using the previously interpolated samples (N x n) of all the (N) reference blocks.

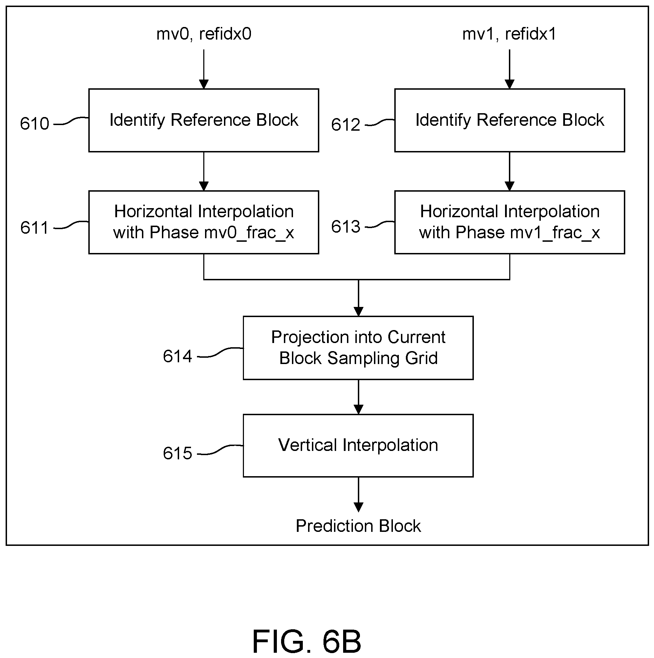

FIG. 6B illustrates an example final interpolation process according to one or more implementations of the present disclosure. At 610, the first reference block (ref_block0) may be identified in the reference picture associated with the first reference index (refidx0) using the first motion vector (mv0). At 612, the second reference block (ref_block1) may be identified in the reference picture associated with the second index (refidx1) using the second motion vector (mv1). At 611, the horizontal interpolation from the first reference block (ref_block0) samples using the phase mv0_frac_x may be performed. At 613, the horizontal interpolation from the second reference block (ref_block1) samples using the phase mv1_frac_x may be performed. At 614, the horizontally interpolated samples from the first reference block (ref_block0) and the second reference block (ref_block1) may be projected into the current block sampling grid. At 615, the vertical interpolation may be performed from the horizontally interpolated samples. This may provide the prediction block. In an example, the horizontal interpolation and then the vertical interpolation can also be performed in the inverse order, i.e. the vertical interpolation and then the horizontal interpolation, for example.

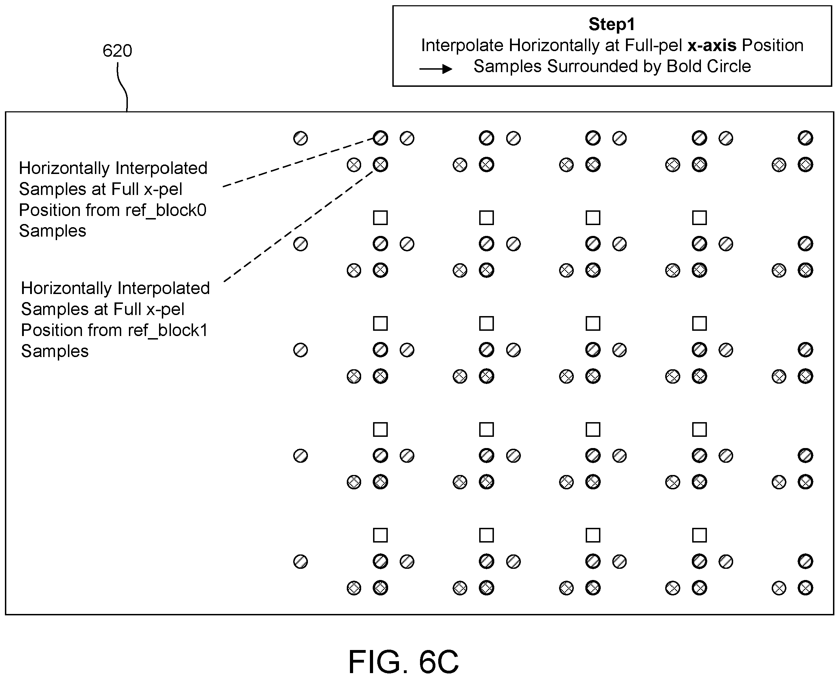

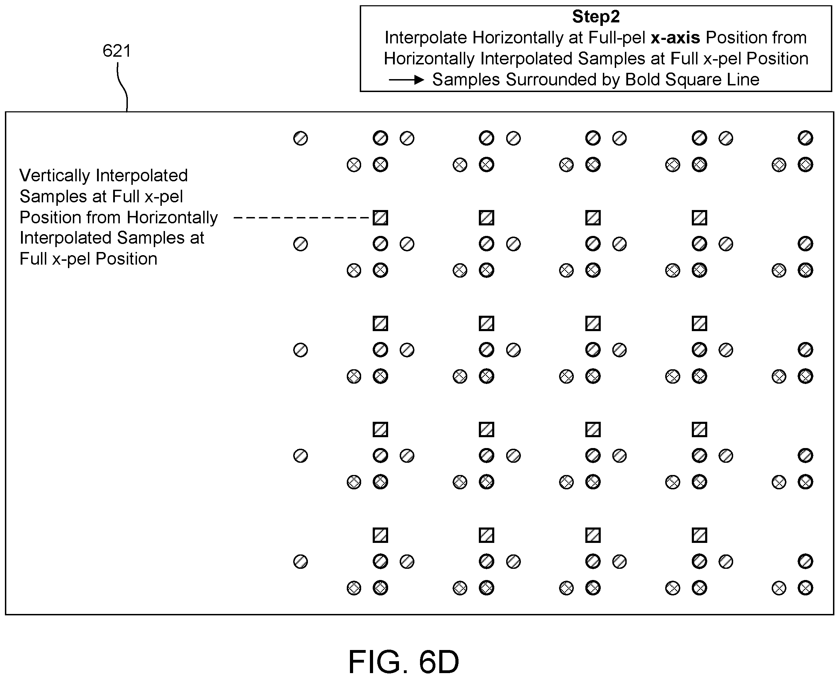

FIG. 6C and FIG. 6D illustrate an example output of the horizontal interpolation from 611, 613, and 614 and the vertical interpolation from 615 respectively, according to one or more implementations of the present disclosure.

At 614, the projected samples from the first reference block (ref_block0) and the second reference block (ref_block1) may be located at the same position in the fractional sampling grid of the current block, for example when the mv0_frac_y and the mv1_frac_y are equal. In this case, the samples values from each reference block may be summed-up, possibly with the one or more global weights assigned to each reference block in case of the weighted prediction and/or the GBI prediction. In an example, the resulting samples may be regularly positioned in the fractional sampling grid of the current block. Therefore, for the vertical interpolation, a traditional 1D interpolation filter may also be applied.

At 614, the projected samples from the first reference block (ref_block0) and the second reference block (ref_block1) may be located non-uniformly in the fractional sampling grid of the current block, when the mv0_frac_y and the mv1_frac_y differ. In an example, a specific interpolation process may be required.

At 615 of vertical (resp. horizontal) interpolation from the horizontally (resp. vertically) interpolated samples, the difficulty is that the samples used for the interpolation may be possibly irregularly positioned in the current block sampling grid, depending on the value of the mv0_frac_y and the mv1_frac_y.

FIG. 6D illustrates an example interpolation in horizontal and/or vertical dimensions, according to one or more implementations of the present disclosure. In the vertical dimension, there may be 2 horizontally interpolated samples, then two holes, then 2 other horizontally interpolated samples, then two holes, etc. The interpolation process may handle the irregularly positioned samples. This process may, for instance, use multiple approaches.

In an example, in a barycentric interpolation using the neighboring irregularly positioned samples (noted q(x,dy) in equations below) may be determined as in Equation 5:

$$p(x,y) = 1/norm \sum_{dy \ in \ V} f(dist(dy)) * q(x, dy) \dots\dots\dots\dots\dots\dots\dots\dots\dots\dots\dots (Equation \ 5)$$

where V is a considered set of one or more vertical positions neighboring the current sample to interpolate (V is of size |V|), in which one or more irregularly positioned neighboring samples q(x,dy) may be included, dy is a vertical position in V, dist(dy) is a distance in the current block sampling grid (for instance Euclidian distance) of a sample q(x,dy) to a current sample to interpolate and norm may be the sum of the multiplicative coefficients f(dist(dy)) (so that p(x,y) is computed as a weighted sum of the one or more neighboring samples), and f(x) may be a pre-defined function, such as but not limited to a monotonic decreasing function. In an example, f(x) = 1/(x+ε), with ε a predefined parameter (for example ε =0.1 or ε =1/16).

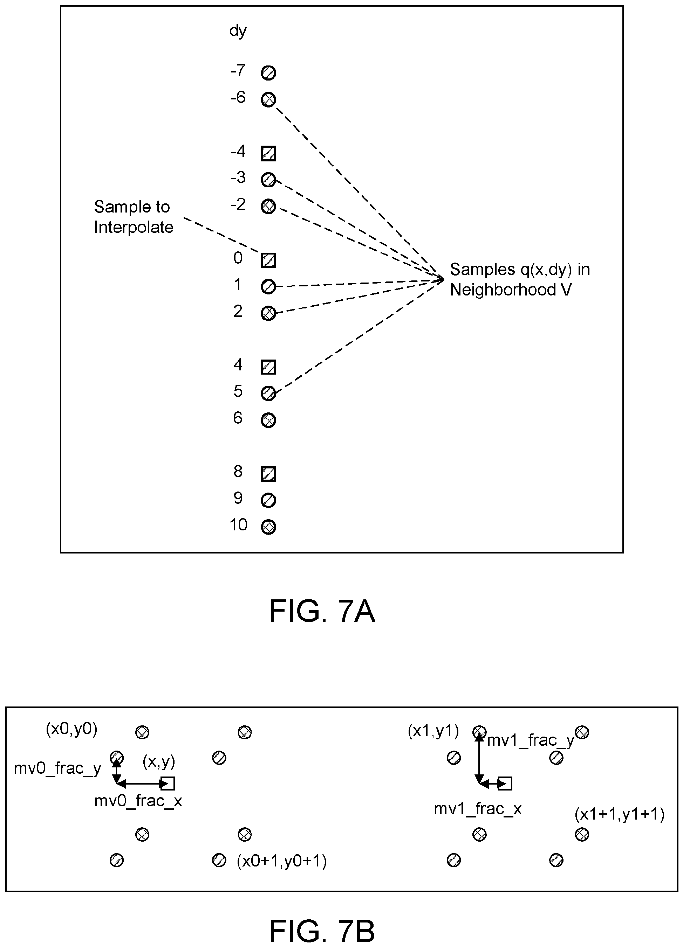

FIG. 7A illustrates an example of a considered neighborhood V, according to one or more implementations of the present disclosure. In this example the considered neighborhood V may be made of 6 samples positions (and therefore 6 samples q(dy)) surrounding the sample to interpolate, indicated by a square.

More generally a weighting sum of neighboring irregularly positioned samples q(x,dy)

$$p(x,y) = 1/norm \sum_{dy \ in \ V} w(dy) * q(x, dy) \dots\dots\dots\dots\dots\dots\dots\dots\dots\dots (Equation \ 6)$$

Where w(dy) is a weight value attributed to sample q(x,dy), for example function of a distance and possibly of other weighting values (e.g. weighting prediction for illumination change and/or temporal weighting (e.g. based on temporal distance and/or temporal layer identifier of reference pictures etc.)).

In an example, equivalently, the 1D convolutional filtering using neighboring irregularly positioned samples q(x,dy) may be used:

$$p(x,y) = \frac{F \otimes q(p)}{norm} \dots\dots\dots\dots\dots\dots\dots\dots\dots\dots\dots\dots\dots\dots\dots\dots\dots \text{(Equation 7)}$$

where $\otimes$ is the convolution operator. For instance, $F \otimes q(p)$ may be written as:

$$F \otimes q(p) = \sum_{dy \text{ in } V} F(dy) . q(x, dy) \dots\dots\dots\dots\dots\dots\dots\dots\dots\dots\dots\dots \text{(Equation 8)}$$

$F \otimes q(p) = \Sigma_{dy} \text{ in } _V F(dy).q(x, dy)$ ................................................ (Equation 8)

In equations 5,6,7,8, a global weighting may be applied to the samples q(x,dy) depending on the reference block they originate from. In an example, considering FIG. 7A, the global weight $W_0$ may be applied to samples originated from the first reference block (ref_block0) (surrounded by a black circle) and the global weight $W_1$ may be applied to samples originated from the second reference block (ref_block1) (surrounded by a grey circle). And for instance, the Equation 8 may become:

$$p(x,y) = \frac{1}{norm}\left(\sum_{dy \text{ in } V0}^{\square} f(dist(dy)) * W0 * q0(x,dy) + \sum_{dy \text{ in } V1}^{\square} f(dist(dy)) * W1 * q1(x,dy)\right)$$

$$\dots\dots\dots\dots\dots\dots\dots\dots\dots\dots\dots\dots\dots\dots\dots\dots\dots\dots\dots\dots\dots\dots\dots \text{(Equation 9)}$$

Where V0 is the set of positions of the samples originated from the first reference block (ref_block0) (V0 is of size $|V_0|$), and V1 is the set of positions of the samples originated from the second reference block (ref_block1) (V1 is of size $|V_1|$), and f(x) may be a pre-defined function, preferably monotonic decreasing, as mentioned above.

In an embodiment, a method for derivation of one or more 1D convolutional filter coefficients from one or more predefined filters is provided.

In an example, for using the 1D convolutional filtering of the one or more neighboring irregularly positioned samples, the one or more 1D filter convolutional coefficients may be derived from an interpolation function f(.) sampled at the one or more positions defined by the mv0_frac_y and the mv1_frac_y.

In an example, for a given phase p, the filter derived from the interpolation function f(.) may be a normalized version of coefficients f(-K+p), ... f(-1+p), f(p), f(1+p), ..., f(L+p), where K and L may be predefined values determining the size of the filter. Alternatively, the filter is derived from one or more pre-defined polyphase filters, such as but not limited to the ones depicted in Table 1. When the mv0_frac_y and the mv1_frac_y are equal (i.e. mv0_frac_y = mv1_frac_y), V0 and V1 are equal, and the filter with the phase p derived from the mv0_frac_y and/or the mv1_frac_y may be directly used (e.g. p=mv0_frac_y = mv1_frac_y). When the mv0_frac_y and the mv1_frac_y are different (mv0_frac_y, mv1_frac_y), V0 and V1 are equal, the filters with the phase p0 derived from the mv0_frac_y and p1 derived from the mv1_frac_y are interlaced (typically p0=mv0_frac_y, p1=mv1_frac_y).

In an example, in the case of Fig. 7A, accuracy of 4th pel, mv0_frac_y=1 and mv1_frac_y=2, and sample to interpolate is sample positioned at dy=0. In an example, one or more filter coefficients may be derived as f(-7),f(-3),f(1),f(5) for mv0_frac_y=1, and f(-6),f(-2),f(2),f(6) for mv1_frac_y=2, if a 4-tap filter is considered for the prediction of each block. Therefore, the 1D convolutional filter operating in the non-uniform sampling grid would be the interlaced version of coefficients: F(0)=f(-7), F(1)=f(-6), F(2)=f(-3), F(3)=f(-2), F(4)=f(1), F(5)=f(2), F(6)=f(5), F(7)=f(6).

In an example, interpolation functions include but are not limited to sinus cardinal, Lanczos, and/or DCT-Interpolation function (DCT-IF) etc.

In an example, the sinus cardinal interpolation is used for one or more non-uniform samples, and multiple elements in a set V are ordered monotonic increasing such that $V = \{dy_1, dy_2, ..., dy_{|V|}\}$ where $dy_{i+1} \geq dy_i$, $1 \leq i \leq |V|$ - 1. In an example, the sinus cardinal kernel interpolation may be optimal if the samples are uniformly sampled. However, the sinus cardinal kernel interpolation may also provide reasonable results if the sampling is not exactly uniform. When $b_i = dy_{i+1} - dy_i$ is a chosen sample spacing which is not fixed in the one or more non-uniform samples case, the sinus cardinal kernel interpolation may be as shown in Equation 10.

$$p(x,y) = \sum_{i=1}^{|V|} b_i * q(x, dy_i) * sinc(y - dy_i) \dots\dots\dots\dots\dots\dots\dots\dots\dots\dots\dots \text{(Equation 10)}$$

Where the sinus cardinal function is $sinc(x) = \frac{\sin(\sigma * x)}{\pi * x}$ and $\sigma$ is the band limit of the signal $q(x, dy_i)$ which is to be selected previously as a positive scalar number such that $\sigma = 1$.

Even though the Equation 10 gives reasonable interpolation accuracy, it still may not be optimal for non-uniform sampling cases. As another implementation, the optimal interpolation for the one or more non-uniform samples shown in Equation 11 may be used.

$$p(x,y) = \sum_{m=1}^{|V|} \square \sum_{n=1}^{|V|} b_{mn} * q(x, dy_n) * sinc(y - dy_m) \dots\dots\dots\dots\dots\dots \text{(Equation 11)}$$

where $b_{mn}$ is the (m,n) element of the inverse of the matrix $M(i, j) = sinc(dy_i - dy_j)$ that includes the sinus cardinal of one or more pairwise differences of the sampling points.

Since Equation 11 needs matrix inversion, it might be computationally complex and may not be robust. Thus, the approximation of Equation 11 known as Sinc-3 may be implemented in a form of Equation 10 where the one or more weights are defined in Equation 12.

$$b_i = \frac{\pi}{\sigma} \left[ \sum_{m=1}^{|V|} sinc^2(dy_m - dy_i) \right]^{-1} \dots\dots\dots\dots\dots\dots\dots\dots\dots\dots\dots\dots \text{(Equation 12)}$$

This approach may be generalized to other interpolation function replacing sinc, such as but not limited to Lanczos, for example.

In an embodiment, derivation of the one or more weights and/or a 1D convolutional filter using neighboring template is provided. In that, the one or more weights and/or the one or more 1D filter coefficients may be derived from a template area surrounding one or more reference blocks and the current block.

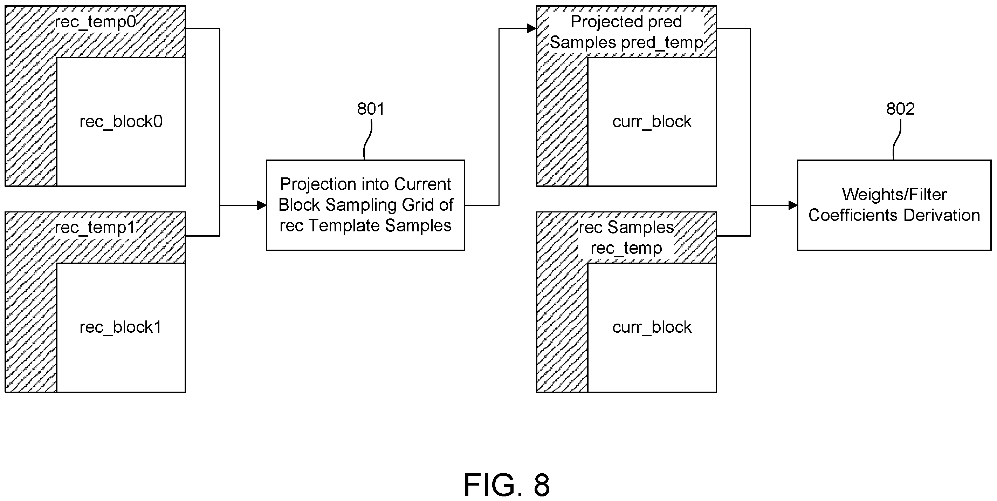

FIG. 8 illustrates an example process of deriving the one or more 1D filter coefficients from the template area surrounding the one or more reference blocks and the current block, according to one or more implementations of the present disclosure. At 801, the one or more samples surrounding the first reference block (ref_block0) and the second reference block (ref_blockl), respectively noted rec _temp0 and rec_temp1, may be projected into the non-uniform sampling grid surrounding the current block. This may generate the samples pred_temp. At 802, the one or more weights and/or the filter coefficients may be derived from the pred_temp and from one or more reconstructed samples surrounding the current block, named rec_temp.

In an example, the one or more filter coefficients F may be derived from the pred_temp and the rec_temp samples by minimizing relative to F the distortion Err computed over the template.

$$Err = \sum_{p \text{ in Template}}^{\square} \left( rec\_temp(p) - F \otimes pred\_temp(p) \right)^2 \dots\dots\dots\dots\dots \text{(Equation 13)}$$

In an example, a least-min-squares estimation may be used to estimate the one or more weights and/or the one or more filter coefficients of F.

In an example, the interpolation process mentioned in 605 may be performed as a 1-step interpolation using for each sample of the current block (cur _block) one or more neighboring fractional samples from the first reference block (ref_block0) and from the second reference block (ref_block1).

FIG. 7B illustrates another example of locations of the one or more considered neighborhood samples in the neighborhood V, according to one or more embodiments.

In an example, the 2D interpolation process may include a bilinear interpolation using the one or more neighboring fractional samples from the first reference block (ref_block0) and the second reference block (ref_block1).

$$p(x,y) = ( p0y * ( r0(x0, y0)*p0x + r0(x0+1, y0)*(1 - p0x) ) +$$
$$(1 - p0y) * ( r0(x0, y0+1)*p0x + r0(x0+1, y0+1)*(1 - p0x) ) +$$
$$p1y * ( r1(x1, y1)*p1x + r1(x1+1, y1)*(1 - p1x) ) +$$
$$(1 - p1y) * ( r1(x1, y1+1)*p1x + r1(x1+1, y1+1)*(1 - p1x) ) )$$
$$/ \text{norm} \quad \dots\dots\dots\dots\dots\dots\dots\dots\dots\dots\dots\dots\dots\dots\dots\dots. \quad \text{(Equation 14)}$$

where (as illustrated in FIG. 7B):

(x,y) is the location in the current picture of the sample to interpolate
(x0,y0) is the location in the current picture of the closest top-left projected sample from the first reference block (ref_block0)

(x1,y1) is the location in the current picture of the closest top-left projected sample from the second reference block (ref_block1)

p0x, p0y, p1x, p1y are derived from mv0_frac_x, mv0_frac_y, mv1_frac_x, mv1_frac_y respectively (typically, p0x=mv0_frac_x, p0y=mv0_frac_y, p1x=mv1_frac_x, p1y=mv1_frac_y)

r0(x,y) is sample of ref_block0 at a position (x,y) in the current picture, r1(x,y) is sample of the second reference block (ref_block1) at a position (x,y) in current picture

norm is a normalizing factor.

The above 2D interpolation process may be performed as two 1D interpolations (e.g. first, the horizontal interpolation and then the vertical interpolation) on the two reference blocks, followed by a simple averaging of the obtained predictions.

In the barycentric interpolation using the one or more neighboring fractional samples from the first reference block (ref_block0) and the second reference block (ref_block1),

$$
\begin{aligned}
p(x,y) = \; & f(dist0(x0,y0))*r0(x0,y0) && + \; f(dist(x0+1,y0))*r0(x0+1, y0) && + \\
& f(dist0(x0,y0+1))*r0(x0,y0+1) + & & f(dist0(x0+1,y0+1))*r0(x0+1,y0+1) \; + \\
& f(dist1(x1,y1))*r1(x1,y1) && + \; f(dist(x1+1,y1))*r1(x1+1, y1) && + \\
& f(dist1(x1,y1+1))*r1(x1,y1+1) + & & f(dist(x1+1,y1+1))*r1(x1+1,y1+1)
\end{aligned}
$$

$$
p(x,y) = \; p(x,y) \; / \; norm \; \dots\dots\dots\dots\dots\dots\dots\dots\dots\dots\dots\dots\dots\dots\dots\dots \text{(Equation 15)}
$$

where dist0(s,t) may be the distance in the current block sampling grid (for instance Euclidian distance) of sample r0(s,t) to current sample to predict (indicated by a square in FIG. 7B), and dist1(s,t) is the distance of sample r1(s,t) to current sample to predict, and f(x) is a pre-defined function, preferably monotonic decreasing, as mentioned above.

In an example, a weighting sum of neighboring fractional samples from the first reference block (ref_block0) and the second reference block (ref_block1) may be used. In that,

$$
\begin{aligned}
p(x,y) = \; & w0 * r0(x0, y0) + w1 * r0(x0+1, y0) + w2 * r0(x0, y0+1) + \\
& w3 * r0(x0+1, y0+1) + \\
& w4 * r1(x1, y1) + w5 * r1(x1+1, y1) + w6 * r1(x1, y1+1) + \\
& w7 * r1(x1+1, y1+1) \; / \; norm \; \dots\dots\dots\dots\dots\dots\dots\dots\dots \text{(Equation 16)}
\end{aligned}
$$

where w0 ... w7 are weights values.

In an example, equivalently, a 2D convolutional filtering using neighboring fractional samples from the first reference block (ref_block0) and the second reference block (ref_block1) may be used. In that,

$$
p(x,y) = \; ( \; F0 \otimes \; r0(p) + F1 \otimes \; r1(p) \; )/ \, norm \dots\dots\dots\dots\dots\dots\dots\dots \text{(Equation 17)}
$$

where $\otimes$ is the convolution operator. For instance, F0$\otimes$ r(p) may be written as:

$$
F0 \otimes r(p) = \sum_{dy=K0 \text{ to } K1} \sum_{dx=L0 \text{ to } L1} F0(dx, dy). \, r(x + dx, y + dy) \dots\dots\dots \text{(Equation 18)}
$$

where L0,L1,K0,K1 are predefined parameters related to the dimensions of filter F0.

At 614, the projected samples from the first reference block (ref_block0) and the second reference block (ref_block1) may be located at the same position in the fractional sampling grid of the current block, when the mv0_frac and the mv1_frac are equal. In this case, the values from each reference block may be summed-up, possibly with the global weight assigned to each reference block in case of weighted prediction and/or GBI prediction.

In an embodiment, a method for the derivation of the one or more weights and/or the 2D convolutional filter coefficients is provided.

In an example, the weights and/or the 2D filter coefficients may be derived from the template area surrounding the one or more reference blocks and the current block, as shown in FIG. 8. The samples surrounding the reference blocks, viz. the first reference block (ref_block0) and the second reference block (ref_block1), respectively noted rec _temp0 and rec_temp1, may be projected into the non-uniform sampling grid surrounding the current block in 801. This generates the samples pred_temp. At 802, the one or more weights and/or the one or more filter coefficients may be derived from the pred_temp and from the one or more reconstructed samples surrounding the current block, i.e. rec_temp.

In an example, the one or more filter coefficients F may be derived from the pred_temp and the rec_temp samples by minimizing relative to F the distortion Err computed over the template as depicted in Equation 10.

In an example, the least-min-squares estimation may be used to estimate the one or more weights and/or the filter coefficients of F.

In Equations 11,12,13, a global weight may be applied to the samples r0 and r1 based on the reference block they originate from.

In an embodiment, the method may be generalized to the MHP case mixing more than 2 predictions. The projection into the current block sampling grid may be performed for all the involved reference blocks.

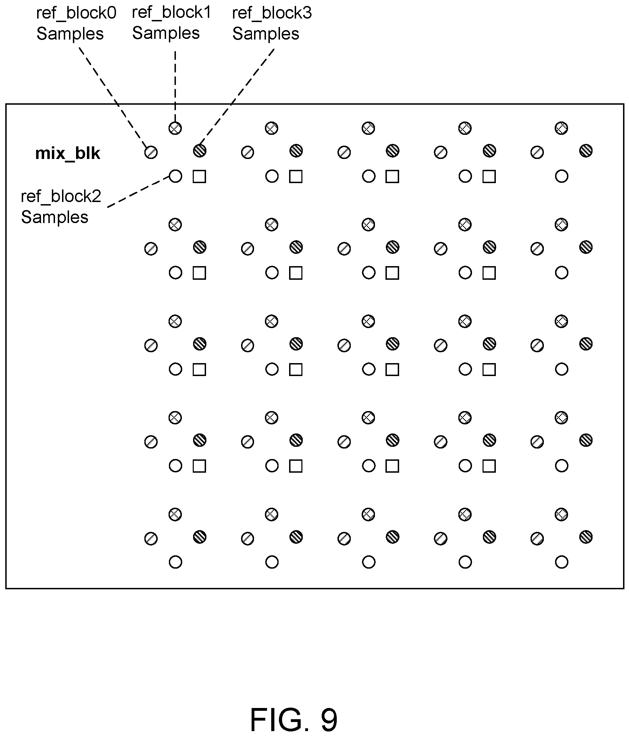

FIG. 9 illustrates an example of a plurality of samples from a plurality of different reference blocks (4 reference blocks are considered in FIG. 9) projected into the current block sampling grid, according to one or more implementations of the present disclosure. Thereafter, the 1-step prediction may be applied based on the projected samples. For example, the barycentric prediction may be applied using one or more closest projected samples from each reference block surrounding each sample to be predicted in the current block.

In an example, the prediction mode described in the present disclosure may replace the conventional bi-prediction mode and/or the conventional MHP modes. In another example, the prediction mode described in the present disclosure may be added as new prediction mode. The usage of the new mode may be controlled by a flag signaled at a coding unit (CU) level and/or a prediction unit (PU) level.

In an example, the prediction mode described in the present disclosure may be enabled for certain CUs, for example the prediction mode described in the present disclosure may be enabled depending on the CU size (for example, for one or more CUs larger than 32x32 (or 1024) samples, or for the one or more CUs smaller than 32x32 (or 1024) samples). The control flag may be signaled for the one or more CUs depending on the respective CU size and/or enablement of the prediction mode. In another example, the prediction mode described in the present disclosure may be enabled depending on the use of weighted prediction (for example when weighted prediction is not used), or on the use of local illumination compensation (for example when local illumination compensation is not used).

In an example, the prediction mode of the present disclosure may be inferred. In an example, for one or more small CUs (for example below 64x64 samples), the conventional bi-prediction and/or MHP mode may be used and for one or more large CUs the enhanced bi-prediction mode and/or the enhanced MHP mode described in the present disclosure may be used. In another example, for the one or more small CUs, the enhanced bi-prediction and/or the enhanced MHP mode described in the present disclosure may be used and for the one or more large CUs the conventional bi-prediction and/or the conventional MHP mode may be used.

In an example, a method for motion estimation and/or prediction generation at an encoder is provided.

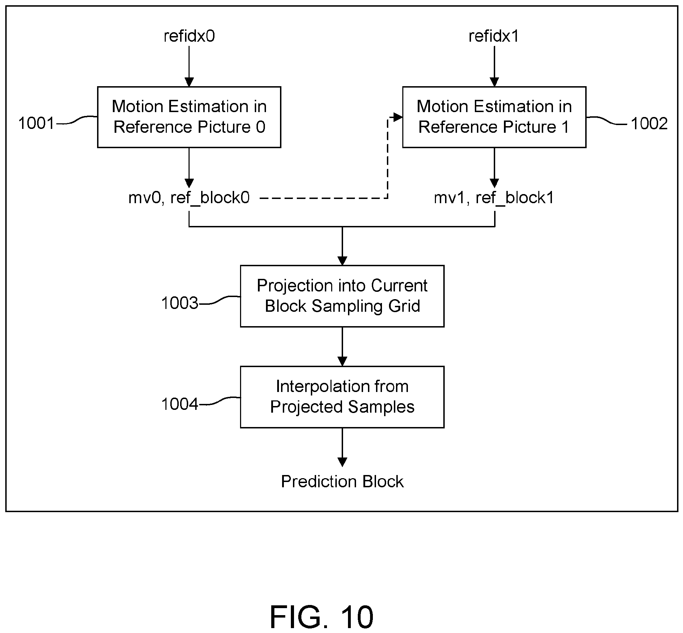

To reduce complexity, the motion estimation may be performed for each reference picture before applying the enhanced interpolation mode of the present disclosure, as illustrated in FIG. 10. A first motion estimation may be performed in reference picture of the first reference index (refidx0) to identify the first motion vector (mv0) and the first reference block (ref_block0) at 1001. A second motion estimation may be performed in the reference picture of the second reference index (refidx1) to identify the second motion vector (mv1) and the second reference block (ref_block1) at 1002. Possibly this process may consider the first reference block (ref_block0). The projection of the one or more reference block samples may be performed at 1003. Then the interpolation from the one or more projected samples may be performed at 1004, to generate the prediction block.

The prediction block may be compared to the prediction from other modes using commonly used rate-distortion optimization process that compares the rate-distortion costs of each tested mode and/or configuration to select the mode and/or configuration leading to the minimum rate-distortion cost.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGS. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method performed by a decoder for decoding video data, the method comprising:

   receiving a plurality of reference blocks from one or more reference pictures for decoding a current block, wherein each reference block of the plurality of reference blocks includes a plurality of reference samples;
   projecting the plurality of reference samples of at least one reference block of the plurality of reference blocks onto a fractional-pel sampling grid associated with the current block;
   interpolating one or more samples from the plurality of reference samples projected onto the fractional-pel sampling grid;
   generating a prediction block based on the one or more interpolated samples; and
   reconstructing the current block using the generated prediction block.

2. The method of claim 1, wherein the plurality of reference samples are positioned non-uniformly onto the fractional-pel sampling grid.

3. The method of any preceding claim, wherein the at least one reference block is identified by a two-dimensional motion vector including a sum of a full-pel motion vector and a fractional-pel motion vector.

4. The method of claim 3, wherein each of the full-pel motion vector and the fractional-pel motion vector comprise at least one of: a horizontal component or a vertical component.

5. The method of any preceding claim, wherein interpolating the one or more samples from the plurality of reference samples comprises performing a two-dimensional interpolation including a horizontal interpolation and a vertical interpolation.

6. The method of any of claims 1 through 4, wherein interpolating the one or more samples from the plurality of reference samples comprises performing a plurality of one dimensional interpolations including at least one of: a horizontal interpolation or a vertical interpolation.

7. The method of any preceding claim, wherein the interpolation includes one or more of:

    a barycentric interpolation,
    a bilinear interpolation,
    a weighted sum of the plurality of reference samples, or
    a convolutional filtering of the plurality of reference samples.

8. The method of claim 7, further comprising:

    determining a global weight for the at least one reference block;
    determining one or more weights for the plurality of reference samples of the at least one reference block based on the global weight associated with the at least one reference block; and
    applying the one or more weights to the plurality of reference samples for generating the weighted sum.

9. A method performed by a video encoder, the method comprising:

    performing motion estimation on a plurality of reference pictures for identifying a plurality of reference blocks;
    determining a plurality of motion vectors corresponding to the plurality of reference blocks;
    projecting a plurality of reference samples from the plurality of reference blocks onto a fractional-pel sampling grid associated with a current block using the plurality of motion vectors; and
    interpolating one or more samples from the plurality of reference samples projected on the fractional-pel sampling grid for generating a prediction block.

10. The method of claim 9, wherein each motion vector of the plurality of motion vectors is a two-dimensional motion vector including a sum of a full-pel motion vector and a fractional-pel motion vector, each comprising at least one of: a horizontal component or a vertical component.

11. The method of any of claims 9-10, further comprising:

    generating one or more prediction blocks using one or more prediction modes;
    determining one or more rate-distortion costs for the one or more prediction blocks;
    selecting a prediction mode of the one or more prediction modes associated with a minimum rate-distortion cost of the one or more rate-distortion costs; and
    encoding the current block using the selected prediction mode.

12. A decoder comprising one or more processors configured to perform any of the methods of claims 1 through 8.

13. A video codec device comprising one or more processors configured to perform any of the methods of claims 1 through 11.

14. A circuit configured to perform any of the methods of claims 1 through 11.

15. A non-transitory computer-readable medium comprising instructions that, when executed by one or more processors of a computing device, cause the one or more processors to perform any of the methods of claims 1 through 11.

FIG. 1

FIG. 2

EP 4 708 849 A1

FIG. 3

FIG. 4A

400 —

Fractional-pel
Position of ref_block
Samples in Currrent
Block Fractional
Sampling Grid

mv_frac

Full-pel Position of
cur_block Samples
in Currrent Block
Fractional Sampling
Grid

Current Picture

FIG. 4B

Reference Picture Index + MV

401 —⌐ Identify Reference Block

402 —⌐ Horizontal Interpolation with Phase MV_frac_x

403 —⌐ Vertical Interpolation with Phase MV_frac_y

Prediction Block

# FIG. 4C

FIG. 4D

**Step2**
Interpolate Horizontally at Full-pel **x-axis** Position from Horizontally Interpolated Samples at Full x-pel Position
⟶ Samples Surrounded by Bold Square Line

405

Vertically Interpolated Samples at Full x-pel Position from Horizontally Interpolated Samples at Full x-pel Position

# FIG. 4E

500

MV0, refidx0                    MV1, refidx1

501 ── Compute Prediction 0        Compute Prediction 1 ── 502

Mix Predictions ── 503

Prediction Block

## FIG. 5A

550

MV0, refidx0        MV1, refidx1        MV2, refidx2

Compute          Compute            Compute
Prediction 0      Prediction 1        Prediction 2

501               502                551

Mix
Predictions

503

Mix
Predictions ── 552

Prediction Block

## FIG. 5B

**Ref_block 0**

mv0_frac

Fractional-pel
Position of
ref_block0
Samples

Full-pel Position
of cur_block
Samples

600

601

**Ref_block 1**

mv1_frac

Fractional-pel
Position of
ref_block1
Samples

Full-pel Position
of cur_block
Samples

Projection into Current Block Sampling Grid

602

**Bipred_blk**

Full-pel Position
of cur_block
Samples

603

605

Interpolation
from Projected
Samples

Prediction
Block

## FIG. 6A

mv0, refidx0            mv1, refidx1

610 — Identify Reference Block     612 — Identify Reference Block

611 — Horizontal Interpolation with Phase mv0_frac_x     613 — Horizontal Interpolation with Phase mv1_frac_x

614 — Projection into Current Block Sampling Grid

615 — Vertical Interpolation

Prediction Block

# FIG. 6B

620

**Step1**
Interpolate Horizontally at Full-pel **x-axis** Position
⟶ Samples Surrounded by Bold Circle

Horizontally Interpolated
Samples at Full x-pel
Position from ref_block0
Samples

Horizontally Interpolated
Samples at Full x-pel
Position from ref_block1
Samples

FIG. 6C

FIG. 6D

FIG. 7A

FIG. 7B

FIG. 8

FIG. 9

FIG. 10

Europäisches
Patentamt

European
Patent Office

Office européen
des brevets

## EUROPEAN SEARCH REPORT

**Application Number**

EP 24 30 6444

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KRUTZ (TECH UNIV BERLIN) A ET AL: "Tool Experiment 3: Inter prediction", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A303; JCTVC-A303, 11 May 2010 (2010-05-11), XP030007589, * section "4.1.2 Parametric Overlapped Block Motion Compensation (POBMC)" * ----- | 1-15 | INV. H04N19/105 H04N19/117 H04N19/147 H04N19/176 H04N19/523 H04N19/59 |
| Y | Y-W CHEN (NCTU) ET AL: "Video coding technology proposal by National Chiao Tung University (NCTU)", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A123; JCTVC-A123, 19 April 2010 (2010-04-19), XP030007571, * the whole document * ----- | 1-15 | |
| A | US 2007/183504 A1 (HOFFMAN MARC [US] ET AL) 9 August 2007 (2007-08-09) * abstract * * paragraphs [0046] - [0047] * * claim 1 * ----- | 1,3,9,10 | **TECHNICAL FIELDS SEARCHED (IPC)** H04N |
| | -/-- | | |

The present search report has been drawn up for all claims

| Place of search | Date of completion of the search | Examiner |
|---|---|---|
| Munich | 27 January 2025 | Fassnacht, Carola |

EPO FORM 1503 03.82 (P04C01)

Europäisches
Patentamt

European
Patent Office

Office européen
des brevets

**EUROPEAN SEARCH REPORT**

Application Number

EP 24 30 6444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI KUN ET AL: "Video super-resolution using an adaptive superpixel-guided auto-regressive model", PATTERN RECOGNITION, vol. 51, 18 August 2015 (2015-08-18), pages 59-71, XP029316806, ISSN: 0031-3203, DOI: 10.1016/J.PATCOG.2015.08.008 * section "2.1 Video super-resolution" * * section "3.3.1 Key-frame warping * ----- | 1,7 | |

TECHNICAL FIELDS
SEARCHED        (IPC)

The present search report has been drawn up for all claims

| Place of search | Date of completion of the search | Examiner |
|---|---|---|
| Munich | 27 January 2025 | Fassnacht, Carola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 6444

27-01-2025

| Patent document cited in search report | Publication date | Patent family member(s) | | Publication date |
|---|---|---|---|---|
| US 2007183504 A1 | 09-08-2007 | CN | 101326550 A | 17-12-2008 |
| | | EP | 1960967 A1 | 27-08-2008 |
| | | JP | 5044568 B2 | 10-10-2012 |
| | | JP | 2009520407 A | 21-05-2009 |
| | | TW | I440364 B | 01-06-2014 |
| | | US | 2007183504 A1 | 09-08-2007 |
| | | WO | 2007078800 A1 | 12-07-2007 |

EPO FORM P0459

For more details about this annex : see Official Journal of the European Patent Office, No. 12/82